# EUROPEAN PATENT SPECIFICATION

(11) **EP 3 176 059 B1**
(45) Date of publication and mention of the grant of the patent: **15.08.2018**
(21) Application number: 16201689.3
(22) Date of filing: 01.12.2016
(51) Int. Cl.: B62D 33/04

(54) **A DEFLECTION PREVENTING STRUCTURE THAT PREVENTS DEFLECTION OF LOWER SIDE STRUCTURES IN LONG VEHICLES**
ABLENKUNGSVERHINDERNDE STRUKTUR ZUR VERHINDERUNG DER ABLENKUNG VON UNTERSEITENSTRUKTUREN BEI LANGEN FAHRZEUGE
STRUCTURE DE PRÉVENTION DE DÉFLEXION QUI EMPÊCHE LA DÉFLEXION DES STRUCTURES DE CÔTÉ INFÉRIEUR DANS DES VÉHICULES LONGS

(30) Priority: 01.12.2015 TR 201515269
(43) Date of publication of application: 07.06.2017
(73) Proprietor: Tirsan Treyler Sanayi Ve Ticaret Anonim Sirketi, 54580 Sakarya (TR)
(72) Inventor: BALABAN, Mehmet, SAKARYA (TR)
(74) Representative: Yamankaradeniz, Kemal

(56) References cited:
- AU-B2- 517 487
- DE-A1- 10 157 594
- DE-U1- 29 801 555
- DE-U1-202012 011 397

## Description

### Technical Field

The invention is a deflection preventing structure that prevents load-related outward deflection of lower side structures in coverless long vehicles with k-fix

### Known State of the Technique

The product which is the subject of the invention is used as support apparatus that prevents load-related outward deflection of lower side structures in coverless vehicles with k-fix.
Since side structures used in the current techniques do not accommodate support apparatuses, they make deflection after a while and start to wind towards the underside by losing their original shapes. This situation both leads to a poor appearance and causes side structure to lose its function after a certain period. DE 298 01 555 U1 discloses a vehicle having a loading platform according to the preamble of claim 1 in that the loading platform features a side structure between the load and a tarpaulin, and a middle sliding post where side structures are installed on the ends. The current technique also incorporates a known example established to support side structures. This implementation is composed of two separate parts and assembled separately.
In this implementation, a fixed connection was made onto side structure and this side structure cannot be used jointly with other side structures. They can be used alone. Also, the existing support apparatus can only be applied onto one side structure. This situation reveals a need of designing a special structure and, side structures, where support apparatus in the existing technique will be applied, should be different than the other apparatuses.
This situation causes an increase in manufacturing cost and the production of parts specific to this work only.
In cases without support apparatus, side structures make deflection after a while and it becomes imperative to replace these structures. This situation also leads to an increase in manufacturing cost and causes the deflecting part to mix with nature as waste.
Provided the problems that will be caused by wastes in the future particularly, greatness of this problem is apparent. Moreover, the fact that costs are high in the present time where competition is also highly significant causes serious issues.
The abovementioned unfavorable situations affect the users and manufacturers negatively.

In the patent investigation for the previous technique, a patent investigation was found titled "Loading platform" with edition number TR201005367. Summary of the invention is as follows: This invention is a Loading platform and composed of two side frames and a row of tie beams in between. These beams are connected to side frames on their ends via shafts on each of them that protrude under ends of each tie beam and are located on cross-aligned hole pairs of side frames.

Another application that was found is a patent application titled "Bearing post connection" with edition number TR200100617. Summary of the invention is as follows: The invention is about a bearing post connection of which upper longitudinal arch or horizontal arch is leaned upon loading platform via at least a high bearing post, and incorporates a foundation for connection of transverse section guard frame with upper longitudinal arches for guard frames of trucks and trailers. A bearing post connection which allows for safe and easy connection of a bearing post with guard frame is related to the fact that the foundation, which is used to connect guard frame of bearing post to its longitudinal arch or horizontal arch, has a connection profile at least in the shape of angle bracket and a mounting slide bar assembly; that connection profile is connected to bearing post in a non-detachable manner; and related to a bearing post connection which is fixed on side wall of upper arch and has a first support surface parallel to underside of upper longitudinal arch or horizontal arch and a recess for fastening of mounting slide bar assembly.

However, as it can be seen in the examples above, no support apparatus has been produced so far which delivers a solution for deflection problem and allows for the implementation of lower side structures in a single piece and with a low cost. Therefore, problems such as high cost, strength and the need of tailored parts are confronted.

Consequently, a development in the concerned technical area was necessitated due to the unfavorable situations above.

### Intention of the Invention

The existing invention is related to support apparatus that prevents load-related outward deflection in coverless vehicles with k-fix which cover the requirements above, eliminate all disadvantages and necessitate some additional advantages.

The main purpose of the invention is to solve deflection problem occurring in lower side structures.

Another purpose of the invention is to solve deflection problem thanks to a support apparatus that enables use of lower side structures as a whole and that can be easily applied.

Another purpose of the invention is to prevent loss of cost and time by enabling covering works in a lump.

Another purpose of the invention is to enable all side structures in the vehicle to be installed on the lowest part in spite of support apparatus.

Another similar purpose of the invention is to prevent exceeding platform's height when support apparatus of side structure is not used.

### Figures that will facilitate understanding the invention

**Figure-1:** Two-dimensional front view of deflection preventing structure in our invention as adapted to loading platform.
**Figure-2:** Two-dimensional section view of deflection preventing structure in our invention as adapted to loading platform.
**Figure-3:** Perspective view of deflection preventing structure in our invention as fixed on rave together with close-up detailed views.
**Figure-4:** Separate close-up detailed view of support apparatus in our invention.
**Figure-5:** Separate close-up detailed view of support part in our invention.
**Figure-6:** Representative schematic view of structure in which deflection preventing structure is used.
**Figure-7:** Representative schematic view of structure in which deflection preventing structure is not used.

### Explanation of Part References

**1 -** Support Apparatus
**1.1** - Retaining Surface
**1.2** - Pin Hole
**1.3 -** Fixation Surface
**1.4** - Twisted Edge
**10 -** Loading Platform
**20 -** Middle Sliding Post
**30 -** Pin Support Piece
**30.1** - Screwed Structure
**30.2** - Stop Protrusion
**30.3** - Nut
**40 -** Rave
**40.1** - Rave Holes
**50 -** Side Structure
**51 -** Frontal Surface
**100** - Deflection Preventing Structure

### Detailed Explanation of the Invention

The invention is the deflection preventing structure (100) that comprises a loading platform (10) where loading is handled in long vehicles, side structure (50) between the load and tarpaulin, and a middle sliding post (20) where side structures (50) are installed on the ends, and that eliminates deflection problem of lower side structure (50) by being fixed on rave (40) in lower side structures (50). This deflection preventing structure (100) possesses multiple support apparatuses (1) which incorporate a retaining surface (1.1) contacting with frontal surface of the mentioned side structure (50), and a fixation surface (1.3) which enables fixation of the mentioned support apparatuses (1) on the rave (40). Also, it comprises several pin support pieces (30) that enable fixation of support apparatus (1) onto rave (40) via hole (1.2) on the concerned fixation surface (1.3).

Moreover, it accommodates a screwed structure (30.1) which attaches support apparatus (1) to rave (40) together with pin support piece (30), and a nut (30.3) which is screwed with this screwed structure (30.1). Likewise, it comprises a stop protrusion (30.2) formed on pin support piece (30) which enables this support apparatus (1) to move up to a certain angle and stops it at this angle. On the other hand, it possesses a support apparatus (10) of which fixation surface (1.3) comprises a short edge (a') while its retaining surface (1.1) contacting with frontal surface of side structure (50) comprises a long edge (a). It also incorporates a twisted edge (1.4) formed between this short edge (a') and long edge (a).

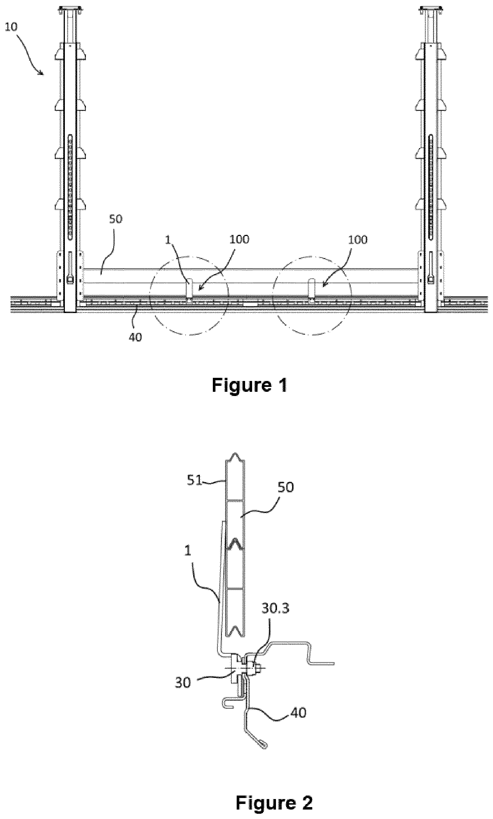

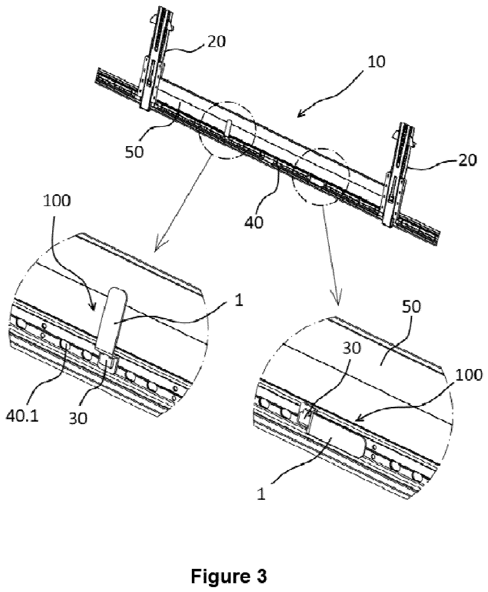

Figures 1, 2 and 3 show a view of support apparatus (1), which is the subject of this invention, as applied on the vehicle. This support apparatus (1) is applied on rave (40) on the vehicle. Support pieces that are installed on rave holes (40.1) on this rave (40) can be rotated, and thus locked and unlocked

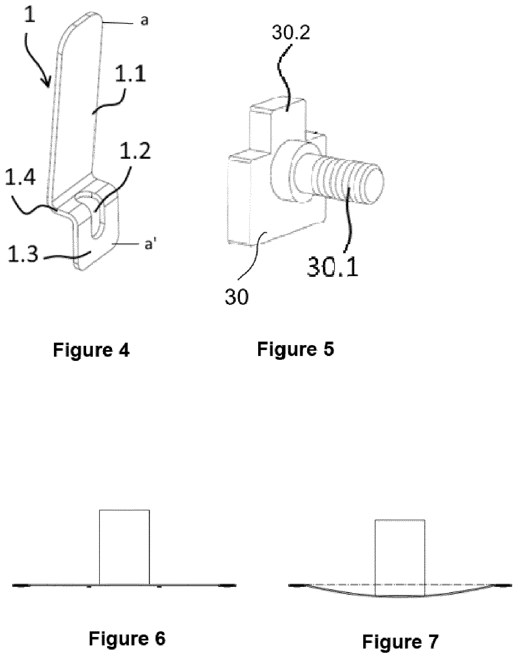

Figure 4 shows perspective view of retaining wall (1.1) of support apparatus (1) in our invention. This support apparatus (1) is comprised of two parts. Retaining surface (1.1) is rectangular twisted in the middle part and accommodates a pin hole (1.2) around its middle part.

Figure 5 shows perspective view of pin support piece (30) that attaches support apparatus (1) in our invention. Pin support piece (30) which attaches support apparatus (1) in our invention is rectangular and accommodates a protruding screwed structure (30.1) on the front. There is a stop protrusion (30.2) on the pin support piece (30) which hampers 360° rotation of retaining surface (1.1) and rotation.

Figure 6 shows section view of support apparatus (1) in our invention as applied on the vehicle. This support apparatus (1) is fixed by being mounted on rave holes (40.1) on the rave (40) thanks to pin support piece (30).

### Working principle of support apparatus (1) in our invention is as follows:

One or more support apparatuses (1) in our invention can be installed on the rave (40) in loading platform (10) depending on the need. Side structures (50) are attached on middle sliding post (20) on the ends. After side structures (50) are placed, retaining surface (1.1) and pin support piece (30) are fixed by rotating the end of retaining surface (1.1) on the axis of pin support piece (30) and perpendicular to the direction of vehicle and then by detruding. Thus, retaining surface (1.1) is prevented to lean laterally or backwards. Support apparatus (1) is locked in this case.

Vice versa, support apparatus (1) is released from side structures (50) and enables easy removal of side structures (50).

Optionally, length of support apparatus (1) can be shortened or lengthened to fix one or two rows of side structures (50). While support apparatus (1) is in closed position, it does not constitute any problem during loading.

Another advantage of support apparatus (1) in our invention is that it can be applied anywhere on the rave (40). The desired rave holes (40.1) on the rave (40) can be chosen and support apparatuses (1) as much as needed can be attached on these holes (40.1).

Furthermore, support apparatus (1) in our invention can be rotated clockwise and counterclockwise, and locked and unlocked. Also, this support apparatus (1) does not protrude on loading platform (10), thus does not constitute any problem in loading area.

## Claims

1. The invention is the deflection preventing structure (100) that comprises a loading platform (10) where loading is handled in long vehicles, side structure (50) between the load and tarpaulin, and a middle sliding post (20) where side structures (50) are installed on the ends, that eliminates deflection problem of lower side structure (50) by being fixed on rave (40) in lower side structures (50); and it consists of the following:
• Multiple support apparatuses (1) possessing retaining surface (1.1) that contacts with frontal surface of this side structure (50),
• A fixation surface (1.3) enabling fixation of the mentioned support apparatuses (1) on rave (40),
• And several pin support pieces (30) fixing support apparatus (1) on rave (40) via pin hole (1.2) on this fixation surface (1.3).

2. It is a preventing structure (100) in accordance with Claim 1, and it consists of a screwed structure (30.1) which attaches this support apparatus (1) to rave (40) together with pin support piece (30), and a nut (30.3) which is screwed with this screwed structure (30.1).

3. It is a preventing structure (100) in accordance with Claim 1, and it consists of a stop protrusion (30.2) formed on pin support piece (30) which enables this support apparatus (1) to move up to a certain angle and stops it at this certain angle.

4. It is a preventing structure (100) in accordance with Claim 1, and it consists of a support apparatus (10) of which fixation surface (1.3) comprises a short edge (a') while its retaining surface (1.1) contacting with frontal surface of side structure (50) comprises a long edge (a).

5. It is a preventing structure (100) in accordance with Claim 1, and it consists of a twisted edge (1.4) formed between this short edge (a') and long edge (a).

## Patentansprüche

1. Die Erfindung ist die Durchbiegung verhindernde Struktur (100), die eine Ladeplattform (10) beinhaltet, wo die Ladung in langen Fahrzeugen abgewickelt wird, eine Seitenstruktur (50) zwischen der Last und der Plane und einen mittleren Gleitpfosten (20), an dem Seitenstrukturen (50) installiert sind an den Enden, was das Durchbiegungsproblem der unteren Seitenstruktur (50) beseitigt, indem es an der Rave (40) in den unteren Seitenstrukturen (50) befestigt ist; und es besteht aus dem Folgenden:
• mehrere Haltevorrichtungen (1) mit einer Haltefläche (1.1), die mit der Stirnfläche dieser Seitenstruktur (50) in Kontakt steht,
• eine Fixierungsfläche (1.3), die eine Fixierung der erwähnten Stützvorrichtungen (1) auf dem Rave (40) ermöglicht,
• und mehrere Stifthalterungsstücke (30), die die Trägervorrichtung (1) an der Rave (40) über das Stiftloch (1.2) an dieser Befestigungsoberfläche (1.3) befestigen.

2. Es ist eine Verhinderungsstruktur (100) gemäß Anspruch 1, und sie besteht aus einer geschraubten Struktur (30.1), die diese Trägervorrichtung (1) zu rave (40)zusammen mit dem Stiftstützteil (30) und einer Mutter (40) befestigt (30.3) welches mit dieser Schraubkonstruktion verschraubt ist (30.1).

3. Es ist eine Verhinderungsstruktur (100) gemäß Anspruch 1, und sie besteht aus einem Anschlagvorsprung (30.2), der an einem Stiftstützteil (30) ausgebildet ist, der es ermöglicht, dass sich diese Stützvorrichtung (1) in einem bestimmten Winkel bewegt und in diesem bestimmten Winkel stoppt..

4. Es ist eine Verhinderungsstruktur (100) gemäß Anspruch 1, und sie besteht aus einer Stützvorrichtung (10), deren Befestigungsfläche (1.3) eine kurze Kante (a ') beinhaltet, während ihre Haltefläche (1.1) die Stirnfläche berührt der Seitenstruktur (50) eine lange Kante (a) umfasst.

5. Es ist eine Verhinderungsstruktur (100) gemäß Anspruch 1 und besteht aus einer verdrillten Kante (1.4), die zwischen dieser kurzen Kante (a ') und der langen Kante (a) gebildet ist.

## Revendications

1. L'invention concerne une structure de prévention de déformation (100) comprenant une plate-forme de chargement (10) dans laquelle le chargement est manipulé dans des véhicules longs, une structure latérale (50) entre la charge et la bâche et une glissière centrale (20) avec des structures latérales installées sur les extrémités qui élimine le problème de déviation de la structure latérale inférieure (50) en étant fixé sur le rail (40) dans les structures latérales inférieures (50); et elle se compose des éléments suivants :
• Appareils de support multiples (1) possédant une surface de retenue (1.1) en contact avec la surface frontale de cette structure latérale (50),
• Une surface de fixation (1.3) permettant la fixation des appareils de support (1) mentionnés sur le rail (40),
• Et plusieurs pièces de support de broche (30) fixant l'appareil de support (1) sur le rail (40) par l'intermédiaire d'un trou de broche (1.2) sur cette surface de fixation (1.3).

2. Il s'agit d'une structure de prévention (100) selon la revendication 1 et elle est constituée d'une structure vissée (30.1) qui fixe cet appareil de support (1) avec une pièce de support de broche (30) et un écrou (30.3) qui est vissé avec cette structure vissée (30.1).

3. Il s'agit d'une structure de prévention (100) selon la revendication 1 et elle consiste en une saillie d'arrêt (30.2) formée sur la pièce de support de broche (30) qui permet à cet appareil de support (1) de se déplacer jusqu'à un certain angle et puis l'arrête à cet angle.

4. Il s'agit d'une structure de prévention (100) selon la revendication 1 et elle est constituée d'un appareil de support (10) dont la surface de fixation (1.3) comprend un bord court (a') tandis que sa surface de retenue (1.1) qui est en contact avec la surface frontale de la structure latérale (50) comprend un bord long (a).

5. Il s'agit d'une structure de prévention (100) selon la revendication 1 et elle consiste en un bord torsadé (1.4) formé entre le bord court (a') et le bord long (a).
